# EUROPEAN PATENT APPLICATION

(11) **EP 4 685 887 A1**
(43) Date of publication of application: **28.01.2026**
(21) Application number: 24785037.3
(22) Date of filing: 28.02.2024
(51) Int. Cl.: H01M 8/04119

(54) **MID-CASE OF FUEL CELL HUMIDIFIER AND FUEL CELL HUMIDIFIER**

(30) Priority: 07.04.2023 KR 20230046156
(71) Applicant: Kolon Industries, Inc., Seoul 07793 (KR)
(72) Inventor: KIM, Do Woo, Seoul 07793 (KR); HER, Jung Kun, Seoul 07793 (KR); KI, Sung Kwan, Seoul 07793 (KR)
(74) Representative: Vossius & Partner Patentanwälte Rechtsanwälte mbB
(86) International application number: PCT/KR2024/002544
(87) International publication number: WO 2024/210327

(57) **Abstract**

The present invention relates to a mid-case of a fuel cell humidifier, and to a fuel cell humidifier, the mid-case comprising: a mid-case body accommodating at least one cartridge containing a hollow fiber membrane bundle; a mid-case inlet through which a first gas flows into the mid-case body; a mid-case outlet, distanced from the mid-case inlet in the first axial direction, through which the first gas is discharged from the mid-case body; a partition wall, disposed inside the mid-case body, for partitioning the interior of the mid-case body into an inflow space into which the first gas flows in, and an outflow space from which the first gas is discharged; and an additional partition wall disposed inside the mid-case body between the mid-case inlet and partition wall in the first axial direction, wherein the partition wall is positioned so that the separation distance is shorter to the mid-case outlet than to the mid-case inlet in the first axial direction, and the additional partition wall is provided with a through-hole through which the first gas is passed.

## Description

### [Technical Field]

The present invention relates to a fuel cell humidifier for supplying a humidified gas to a fuel cell.

### [Background Art]

Fuel cells have advantages of being able to continuously produce electricity as long as hydrogen and oxygen are supplied and having efficiency that is about twice that of an internal combustion engine because they have no heat loss, unlike general chemical cells such as dry cells or storage cells.

Further, since chemical energy generated through coupling between hydrogen and oxygen is directly converted into electrical energy, emission of pollutants is reduced. Therefore, the fuel cells have advantages of being environmentally friendly and being able to reduce concerns about resource depletion due to increased energy consumption.

These fuel cells may be roughly classified into a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC) depending on the type of electrolyte used.

These fuel cells fundamentally operate according to the same principle but differ from one another in terms of the type of fuel used, an operating temperature, a catalyst, an electrolyte, or the like. Among the fuel cells, the PEMFC is known to be the most promising not only for small-scale stationary power generation equipment but also for transportation systems because the PEMFC operates at a lower temperature than other fuel cells and can be miniaturized due to a high output density.

One of the most important factors in improving the performance of the PEMFC is to maintain moisture content by supplying a certain amount or more of moisture to a polymer electrolyte membrane (or proton exchange membrane: PEM) of a membrane electrode assembly (MEA). This is because the efficiency of power generation is rapidly degraded when the polymer electrolyte membrane is dried.

Examples of a method for humidifying the polymer electrolyte membrane include: 1) a bubbler humidification scheme for filling a pressure-resistant container with water and then passing a target gas through a diffuser to supply moisture; 2) a direct injection scheme for calculating a moisture supply amount required for a fuel cell reaction and directly supplying moisture to a gas flow pipe through a solenoid valve; and 3) a humidification membrane scheme for supplying moisture to a fluidized gas layer using a polymer separation membrane.

Among these, the membrane humidification scheme for humidifying a polymer electrolyte membrane by providing water vapor to air supplied to the polymer electrolyte membrane using a membrane that selectively allows only water vapor contained in an off-gas to pass through is advantageous in that a weight and size of a humidifier can be reduced.

A selective permeable membrane used in the membrane humidification scheme is preferably a hollow fiber membrane having a large permeable area per unit volume when a module is formed. That is, when a humidifier is manufactured using hollow fiber membranes, there are advantages that high integration of the hollow fiber membranes with a large contact surface area is possible so that a fuel cell can be sufficiently humidified even with a small capacity, low-cost materials can be used, and moisture and heat contained in an off-gas discharged with a high temperature from the fuel cell can be recovered and can be reused through the humidifier.

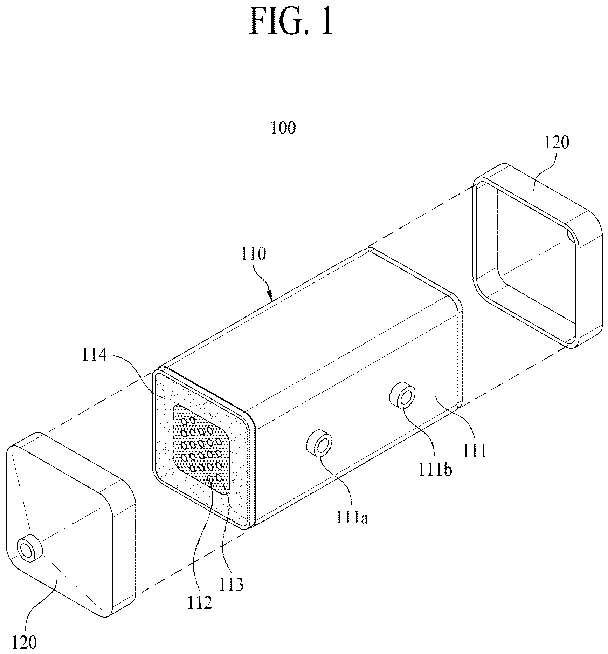

FIG. 1 is a schematic exploded perspective view of a typical fuel cell humidifier.

As illustrated in FIG. 1, a typical membrane humidification type humidifier 100 includes a humidification module 110 in which moisture exchange occurs between air supplied from the outside and an off-gas discharged from a fuel cell stack (not illustrated) and caps 120 coupled to both ends of the humidification module 110.

One of the caps 120 delivers air supplied from the outside to the humidification module 110, and the other delivers air humidified by the humidification module 110 to the fuel cell stack.

The humidification module 110 includes a mid-case 111 having an off-gas inlet 111a and an off-gas outlet 111b and a plurality of hollow fiber membranes 112 in the mid-case 111. Both ends of the hollow fiber membranes 112 are potted to a fixing layer 113. The fixing layer 113 is generally formed by curing a liquid polymer such as a liquid polyurethane resin through a casting scheme. The fixing layer 113 to which the ends of the hollow fiber membranes 112 are potted and a resin layer 114 between the fixing layer 113 and the mid-case 111 block inner spaces of the caps 120 from an inner space of the mid-case 111. Like the fixing layer 113, the resin layer 114 is generally formed by curing a liquid polymer such as a liquid polyurethane resin through a casting scheme.

Air supplied from the outside flows along hollows of the hollow fiber membranes 112. An off-gas flowing into the mid-case 111 through the off-gas inlet 111a comes into contact with outer surfaces of the hollow fiber membranes 112 and then flows out from the mid-case 111 through the off-gas outlet 111b. When the off-gas comes into contact with the outer surfaces of the hollow fiber membranes 112, moisture contained in the off-gas permeates through the hollow fiber membranes 112, thereby humidifying the air flowing along the hollows of the hollow fiber membranes 112.

In this case, conventionally, the humidification efficiency decreases due to a decrease in the wetness of the off-gas at portions of the hollow fiber membranes 112 that are disposed between the off-gas inlet 111a and the off-gas outlet 111b, and thus there is a problem that the overall humidification performance is degraded.

### [Disclosure]

### [Technical Problem]

The present invention has been devised to address the above-described problems and is directed to providing a mid-case of a fuel cell humidifier and the fuel cell humidifier capable of improving the efficiency of humidification using hollow fiber membranes.

### [Technical Solution]

To achieve the above objective, the present invention may include the following configurations.

A mid-case of a fuel cell humidifier according to the present invention is provided in a fuel cell humidifier that uses a wet gas to humidify a dry gas to be supplied to a fuel cell stack, the mid-case including: a mid body accommodating at least one cartridge including a hollow fiber membrane bundle; a mid-inlet for allowing a first gas to flow into the mid body; a mid-outlet that is disposed apart from the mid-inlet in a first axial direction and is for allowing the first gas to flow out from inside the mid body; a partition wall disposed inside the mid body and partitioning the inside of the mid body into an inflow space through which the first gas flows in and an outflow space through which the first gas flows out; and an additional partition wall disposed inside the mid body and disposed between the mid-inlet and the partition wall in the first axial direction. The partition wall may be disposed at a position where a distance from the mid-outlet is shorter than a distance from the mid-inlet in the first axial direction. A through-hole for allowing the first gas to pass may be formed in the additional partition wall.

A fuel cell humidifier according to the present invention may include: a humidification module using a wet gas to humidify a dry gas to be supplied to a fuel cell stack; a first cap coupled to one end of the humidification module; and a second cap coupled to the other end of the humidification module. The humidification module may include a mid-case of which both ends are open and at least one cartridge accommodated inside the mid-case. The mid-case may include: a mid body accommodating the cartridge; a mid-inlet for allowing a first gas to flow into the mid body; a mid-outlet that is disposed apart from the mid-inlet in a first axial direction and is for allowing the first gas to flow out from inside the mid body; a partition wall disposed inside the mid body and partitioning the inside of the mid body into an inflow space through which the first gas flows in and an outflow space through which the first gas flows out; and an additional partition wall disposed inside the mid body and disposed between the mid-inlet and the partition wall in the first axial direction. The partition wall may be disposed at a position where a distance from the mid-outlet is shorter than a distance from the mid-inlet in the first axial direction. A through-hole for allowing the first gas to pass may be formed in the additional partition wall.

### [Advantageous Effects]

According to the present invention, since a partition wall is implemented to be disposed at a position that is closer to a mid-outlet, a distance at which a first gas flowing in through a mid-inlet is able to flow toward the partition wall can be increased. Accordingly, the present invention is implemented so that it is possible to supply a first gas that has not exchanged moisture with a second gas yet to a portion of a hollow fiber membrane bundle disposed between the mid-inlet and the mid-outlet. Therefore, since the efficiency of humidification using the portion of the hollow fiber membrane bundle disposed between the mid-inlet and the mid-outlet can be improved, the present invention can have further improved humidification performance.

By using an additional partition wall disposed between the mid-inlet and the partition wall and a through-hole formed in the additional partition wall, the present invention is implemented to reduce a flow rate of the first gas flowing in between the additional partition wall and the partition wall. Accordingly, in the present invention, it is possible to reduce the flow rate of the first gas that flows into the portion of the hollow fiber membrane bundle disposed between the mid-inlet and the mid-outlet and has a relatively short residence time inside a cartridge. Therefore, the present invention is implemented so that it is possible to simultaneously improve the efficiency of humidification using the portion of the hollow fiber membrane bundle disposed between the mid-inlet and the mid-outlet and further improve the overall efficiency of humidification using the hollow fiber membrane bundle in consideration of the residence time inside the cartridge.

### [Description of Drawings]

FIG. 1 is a schematic exploded perspective view of a typical fuel cell humidifier.
FIG. 2 is a schematic exploded perspective view of a fuel cell humidifier according to the present invention.
FIG. 3 is a schematic exploded cross-sectional view of the fuel cell humidifier according to the present invention along line I-I of FIG. 2.
FIG. 4 is a schematic coupling cross-sectional view of the fuel cell humidifier according to the present invention along line I-I of FIG. 2.
FIGS. 5 and 6 are schematic plan views of a cartridge of the fuel cell humidifier according to the present invention.
FIG. 7 is a schematic side cross-sectional view of the fuel cell humidifier according to the present invention along line II-II of FIG. 2.
FIG. 8 is a schematic regular cross-sectional view of portion A of FIG. 7.
FIG. 9 is a schematic side cross-sectional view showing portion B of FIG. 7 in an enlarged manner.

### [Best Modes]

Hereinafter, embodiments of a fuel cell humidifier according to the present invention will be described in detail with reference to the accompanying drawings. A mid-case of the fuel cell humidifier according to the present invention may be included in the fuel cell humidifier according to the present invention and thus will be described together in the description of the embodiments of the fuel cell humidifier according to the present invention.

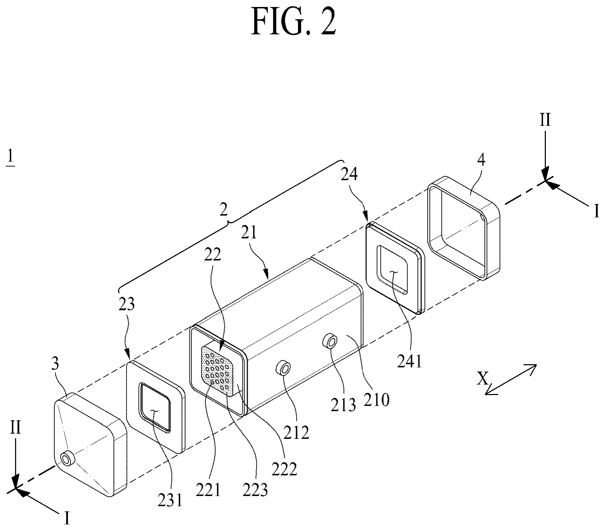

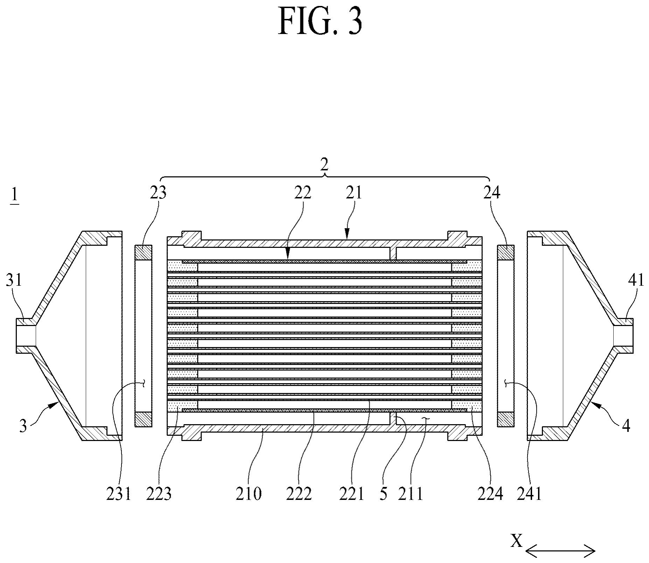

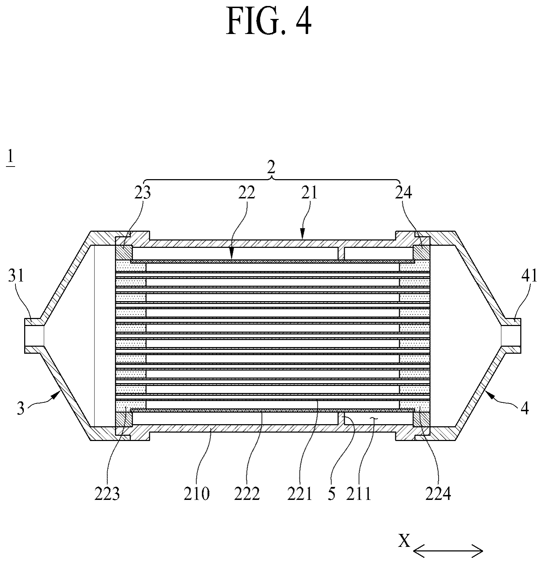

Referring to FIGS. 2 to 4, a fuel cell humidifier 1 according to the present invention uses a wet gas to humidify a dry gas to be supplied to a fuel cell stack (not illustrated). The wet gas may be a gas discharged from the fuel cell stack. The dry gas may be a fuel gas or air. The dry gas may be supplied to the fuel cell stack after being humidified by the wet gas. The fuel cell humidifier 1 according to the present invention includes a humidification module 2 for humidifying the dry gas, a first cap 3 coupled to one end of the humidification module 2, and a second cap 4 coupled to the other end of the humidification module 2.

Referring to FIGS. 2 to 4, the humidification module 2 humidifies the dry gas. The first cap 3 may be coupled to the one end of the humidification module 2. The second cap 4 may be coupled to the other end of the humidification module 2. The humidification module 2 may use a first gas and a second gas to supply a humidified dry gas to the fuel cell stack. When the first gas is a dry gas, the second gas may be a wet gas. In this case, the first gas may be supplied to the fuel cell stack after being humidified by the second gas. When the first gas is a wet gas, the second gas may be a dry gas. In this case, the second gas may be supplied to the fuel cell stack after being humidified by the first gas.

The humidification module 2 includes a mid-case 21 and at least one cartridge 22.

The cartridge 22 is coupled to the mid-case 21. The cartridge 22 may be accommodated inside the mid-case 21. Both ends of the mid-case 21 are open. In this case, an accommodation hole 211 may be formed in the mid-case 21. The accommodation hole 211 may be formed to pass through the mid-case 21 in a first axial direction (X-axis direction). At least one cartridge 22 may be disposed in the accommodation hole 211.

The mid-case 21 may include a mid body 210. The mid body 210 accommodates the cartridge 22. The cartridge 22 may be accommodated in the mid body 210 by being disposed inside the mid body 210. At least one cartridge 22 may be accommodated in the mid body 210. The accommodation hole 211 may be formed to pass through the mid body 210 in the first axial direction (X-axis direction).

The mid-case 21 may include a mid-inlet 212 and a mid-outlet 213. The mid-inlet 212 may allow the first gas to flow into the mid body 210. The mid-outlet 213 may allow the first gas to flow out from inside the mid body 210. The mid-outlet 213 and the mid-inlet 212 may each protrude from the mid body 210. The mid-outlet 213 and the mid-inlet 212 may be disposed apart from each other in the first axial direction (X-axis direction). The mid-outlet 213, the mid-inlet 212, and the mid body 210 may also be integrally formed.

The cartridge 22 is disposed inside the mid-case 21. The cartridge 22 may be accommodated in the mid body 210. The cartridge 22 includes a hollow fiber membrane bundle 221. The hollow fiber membrane bundle 221 may be coupled to the cartridge 22 and modularized. Accordingly, through a process of coupling the cartridge 22 to the mid-case 21, the hollow fiber membrane bundle 221 may be installed inside the mid-case 21. Therefore, the fuel cell humidifier 1 according to the present invention can improve ease of an installation task, a separation task, and a replacement task for the hollow fiber membrane bundle 221. The hollow fiber membrane bundle 221 may include a plurality of hollow fiber membranes. The hollow fiber membranes may each include a hollow for passing the second gas.

The cartridge 22 may include an inner case 222.

The inner case 222 has openings at both ends, and the hollow fiber membrane bundle 221 is placed therein. The hollow fiber membrane bundle 221 may be disposed inside the inner case 222 and modularized. The hollow fiber membrane bundle 221 may include a polymer membrane formed of a polysulfone resin, a polyethersulfone resin, a sulfonated polysulfone resin, a polyvinylidene fluoride (PVDF) resin, a polyacrylonitrile (PAN) resin, a polyimide resin, a polyamide resin, a polyesterimide resin, or a mixture of two or more thereof.

The cartridge 22 may include a first fixing layer 223. The first fixing layer 223 fixes one end of the hollow fiber membrane bundle 221. The first fixing layer 223 may close the opening formed at one end of the inner case 222. In this case, the first fixing layer 223 may be formed to not block the hollows of the hollow fiber membranes. The first fixing layer 223 may be formed by curing a liquid resin, such as a liquid polyurethane resin, through a casting process. The first fixing layer 223 may have one portion located inside the inner case 222 and another portion protruding to the outside of the inner case 222. The first fixing layer 223 may fix the one end of the hollow fiber membrane bundle 221 and the inner case 222.

The cartridge 22 may include a second fixing layer 224. The second fixing layer 224 fixes the other end of the hollow fiber membrane bundle 221. The second fixing layer 224 may close the opening formed at the other end of the inner case 222. In this case, the second fixing layer 224 may be formed to not block the hollows of the hollow fiber membranes. The second fixing layer 224 may be formed by curing a liquid resin, such as a liquid polyurethane resin, through a casting process. The second fixing layer 224 may have one portion located inside the inner case 222 and another portion protruding to the outside of the inner case 222. The second fixing layer 224 may fix the other end of the hollow fiber membrane bundle 221 and the inner case 222. Since the second fixing layer 224 and the first fixing layer 223 are formed to not block the hollows of the hollow fiber membranes, the second gas may be supplied to the hollows of the hollow fiber membranes without being interfered with by the second fixing layer 224 and the first fixing layer 223 and may flow out from the hollows of the hollow fiber membranes without being interfered with by the second fixing layer 224 and the first fixing layer 223.

Referring to FIGS. 2 to 6, the cartridge 22 may include an inner inlet 225 and an inner outlet 226.

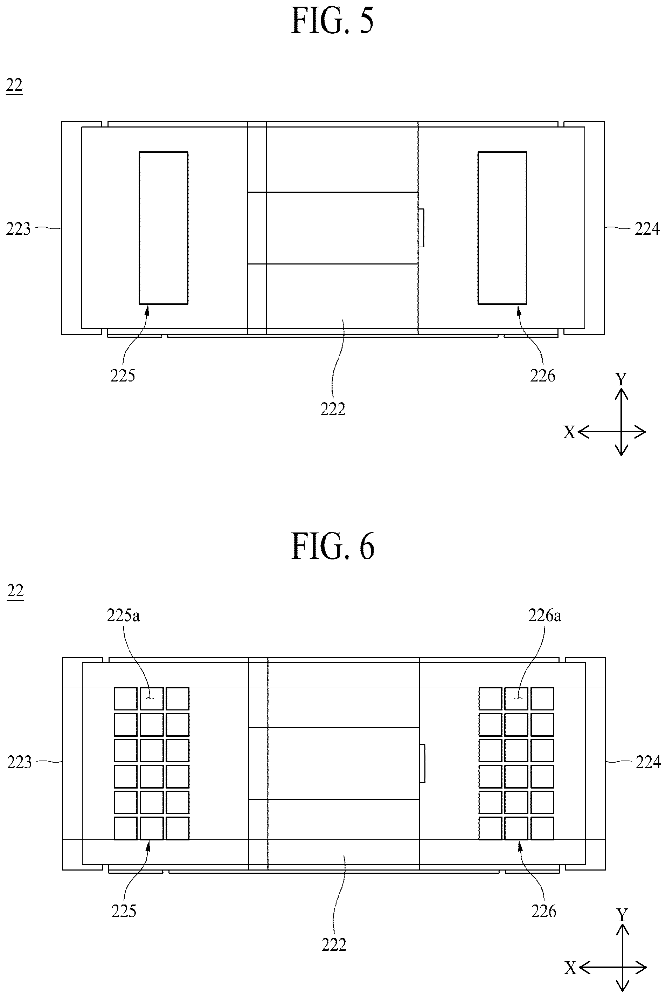

The inner inlet 225 is formed in the inner case 222. The inner inlet 225 may be formed in one surface of the inner case 222. The one surface of the inner case 222 may be disposed toward any one sidewall among sidewalls of the mid-case 21. The inner inlet 225 may allow the first gas to flow into the inner case 222. The inner inlet 225 may be formed to pass through the inner case 222. As illustrated in FIG. 5, the inner inlet 225 may be implemented as one through-hole that passes through the inner case 222. As illustrated in FIG. 6, the inner inlet 225 may be implemented as a plurality of through-holes that pass through the inner case 222. In this case, the inner inlet 225 may include a plurality of inflow windows 225a formed to pass through different portions of the inner case 222. The inflow windows 225a may be disposed to constitute a matrix form by being spaced from each other in each of the first axial direction (X-axis direction) and a second axial direction (Y-axis direction). The second axial direction (Y-axis direction) and the first axial direction (X-axis direction) are axial directions disposed perpendicular to each other.

The inner outlet 226 is formed in the inner case 222. The inner outlet 226 may be formed in one surface of the inner case 222. The inner outlet 226 may allow the first gas to flow out from inside the inner case 222. The inner outlet 226 may be formed to pass through the inner case 222. As illustrated in FIG. 5, the inner outlet 226 may be implemented as one through-hole that passes through the inner case 222. As illustrated in FIG. 6, the inner outlet 226 may be implemented as a plurality of through-holes that pass through the inner case 222. In this case, the inner outlet 226 may include a plurality of outflow windows 226a formed to pass through different portions of the inner case 222. The outflow windows 226a may be disposed to constitute a matrix form by being spaced from each other in each of the first axial direction (X-axis direction) and the second axial direction (Y-axis direction). The inner outlet 226 and the inner inlet 225 may be disposed at positions spaced from each other in the first axial direction (X-axis direction).

When the first gas is a wet gas, the first gas may be supplied between an inner surface of the mid-case 21 and an outer surface of the cartridge 22 through the mid-inlet 212, may be supplied to the inside of the cartridge 22 through the inner inlet 225, and may come into contact with outer surfaces of the hollow fiber membranes of the hollow fiber membrane bundle 221. In this process, moisture contained in the first gas may permeate through the hollow fiber membranes of the hollow fiber membrane bundle 221, thereby humidifying the second gas flowing along the hollows of the hollow fiber membranes of the hollow fiber membrane bundle 221. The humidified second gas may flow out from the hollow fiber membrane bundle 221 and then may be supplied to the fuel cell stack through the first cap 3 or the second cap 4. After the second gas is humidified, the first gas may flow out between the outer surface of the cartridge 22 and the inner surface of the mid-case 21 through the inner outlet 226 and may flow to the outside of the mid-case 21 through the mid-outlet 213. In this case, the first gas may be an off-gas discharged from the fuel cell stack.

When the first gas is a dry gas, the first gas may be supplied between the inner surface of the mid-case 21 and the outer surface of the cartridge 22 through the mid-inlet 212, may be supplied to the inside of the cartridge 22 through the inner inlet 225, and may come into contact with the outer surfaces of the hollow fiber membranes of the hollow fiber membrane bundle 221. In this process, moisture of the second gas flowing along the hollows of the hollow fiber membranes of the hollow fiber membrane bundle 221 may permeate through the hollow fiber membranes of the hollow fiber membrane bundle 221, thereby humidifying the first gas flowing into the cartridge 22. The humidified first gas may flow out between the outer surface of the cartridge 22 and the inner surface of the mid-case 21 through the inner outlet 226, may flow to the outside of the mid-case 21 through the mid-outlet 213, and then may be supplied to the fuel cell stack. After the first gas is humidified, the second gas may flow out from the hollow fiber membrane bundle 221 and then may flow to the outside through the first cap 3 or the second cap 4. In this case, the second gas may be an off-gas discharged from the fuel cell stack.

The humidification module 2 may include a first packing 23.

The first packing 23 is hermetically coupled to one end of the mid-case 21 through mechanical assembly. Accordingly, the first packing 23 may allow the first cap 3 to fluidly communicate only with the hollow fiber membrane bundle 221. Therefore, the first packing 23 may prevent the first gas and the second gas from being directly mixed. By being disposed between the mid-case 21 and the cartridge 22, the first packing 23 may seal between the mid-case 21 and the cartridge 22. In this case, the cartridge 22 may be inserted into a first insertion hole 231 formed in the first packing 23. The first packing 23 may be in contact with each of the inner surface of the mid-case 21, the outer surface of the cartridge 22, and the first fixing layer 223. Through this contact, the first packing 23 may be hermetically coupled to the one end of the mid-case 21. In this case, the first packing 23 may also be in contact with each of a portion of the inner surface of the mid-case 21, a portion of the outer surface of the cartridge 22, and a portion of the first fixing layer 223.

The humidification module 2 may include a second packing 24.

The second packing 24 is hermetically coupled to the other end of the mid-case 21 through mechanical assembly. Accordingly, the second packing 24 may allow the second cap 4 to fluidly communicate only with the hollow fiber membrane bundle 221. Therefore, the second packing 24 may prevent the first gas and the second gas from being directly mixed. By being disposed between the mid-case 21 and the cartridge 22, the second packing 24 may seal between the mid-case 21 and the cartridge 22. In this case, the cartridge 22 may be inserted into a second insertion hole 241 formed in the second packing 24. The second packing 24 may be in contact with each of the inner surface of the mid-case 21, the outer surface of the cartridge 22, and the second fixing layer 224. Through this contact, the second packing 24 may be hermetically coupled to the other end of the mid-case 21. In this case, the second packing 24 may also be in contact with each of a portion of the inner surface of the mid-case 21, a portion of the outer surface of the cartridge 22, and a portion of the second fixing layer 224.

Referring to FIGS. 2 to 4, the first cap 3 is coupled to the one end of the humidification module 2. A space between the first cap 3 and the cartridge 22 may be sealed relative to a space between the cartridge 22 and the mid-case 21 by the first packing 23. The first cap 3 may include a first port 31. The first port 31 is for allowing the second gas to flow. The first port 31 may communicate with the hollows of the hollow fiber membranes of the hollow fiber membrane bundle 221. Accordingly, in a process in which the second gas flows between the first cap 3 and the hollow fiber membrane bundle 221, the second gas may flow in or out through the first port 31.

Referring to FIGS. 2 to 4, the second cap 4 is coupled to the other end of the humidification module 2. The second cap 4 may be disposed at a position spaced from the first cap 3 in the first axial direction (X-axis direction). A space between the second cap 4 and the cartridge 22 may be sealed relative to the space between the cartridge 22 and the mid-case 21 by the second packing 24. The second cap 4 may include a second port 41. The second port 41 is for allowing the second gas to flow. The second port 41 may communicate with the hollows of the hollow fiber membranes of the hollow fiber membrane bundle 221. Accordingly, in a process in which the second gas flows between the second cap 4 and the hollow fiber membrane bundle 221, the second gas may flow in or out through the second port 41. When the second gas flows in through the second port 41, the second gas may flow out through the first port 31. In this case, the second gas may exchange moisture with the first gas while sequentially passing through the second cap 4, the hollows of the hollow fiber membranes of the hollow fiber membrane bundle 221, and the first cap 3. When the second gas flows out through the second port 41, the second gas may flow in through the first port 31. In this case, the second gas may exchange moisture with the first gas while sequentially passing through the first cap 3, the hollows of the hollow fiber membranes of the hollow fiber membrane bundle 221, and the second cap 4. Although not illustrated, resin layers may be formed on both ends of the mid-case 21, in place of the packings 23 and 24. The resin layers may be formed by curing a liquid polymer, such as a liquid polyurethane resin, through a casting scheme.

Here, the fuel cell humidifier 1 according to the present invention is implemented so that an area in which the first gas flows into the mid body 210 through the mid-inlet 212 and then flows into the cartridge 22 can be expanded in the first axial direction (X-axis direction). To this end, the mid-case 21 may be implemented as follows.

Referring to FIGS. 2 to 8, the mid-case 21 may include a partition wall 5.

The partition wall 5 is disposed inside the mid body 210. The partition wall 5 may partition the inside of the mid body 210 into an inflow space IS and an outflow space OS. The inflow space IS is a space through which the first gas flows into the mid body 210. The inflow space IS may be connected to communicate with the mid-inlet 212. Accordingly, the first gas may flow into the inflow space IS through the mid-inlet 212. The outflow space OS is a space through which the first gas flows to the outside of the mid body 210. The outflow space OS may be connected to communicate with the mid-outlet 213. Accordingly, the first gas may flow out from the outflow space OS through the mid-outlet 213. The outflow space OS and the inflow space IS may be spatially separated by the partition wall 5. In this case, the partition wall 5 may be coupled to the mid body 210 to be in contact with the entire inner surface 210a of the mid body 210. Accordingly, the first gas flowing into the inflow space IS may flow to the outflow space OS only through the inside of the cartridge 22. In this case, the first gas may exchange moisture with the second gas in a process in which the first gas flows along the inside of the cartridge 22.

In the first axial direction (X-axis direction), the partition wall 5 may be disposed at a position where a distance 5b from the mid-outlet 213 is shorter than a distance 5a from the mid-inlet 212. That is, in the first axial direction (X-axis direction), the partition wall 5 may be spaced a longer distance from the mid-inlet 212. Accordingly, in the first axial direction (X-axis direction), the partition wall 5 may further increase a length of the inflow space IS. Therefore, in the fuel cell humidifier 1 according to the present invention, it is possible to increase a distance that the first gas flowing in through the mid-inlet 212 is able to flow toward the partition wall 5 in the first axial direction (X-axis direction). Accordingly, the fuel cell humidifier 1 according to the present invention may promote the following effects.

First, in the fuel cell humidifier 1 according to the present invention, when the first gas is a wet gas, it is possible to increase a distance that the wet gas not in contact with the hollow fiber membrane bundle 221 is able to flow toward the partition wall 5 in the first axial direction (X-axis direction). Accordingly, the fuel cell humidifier 1 according to the present invention is implemented so that it is possible to supply the wet gas that has not exchanged moisture yet also to a portion of the hollow fiber membrane bundle 221 disposed between the mid-inlet 212 and the mid-outlet 213 [hereinafter referred to as "intermediate portion of the hollow fiber membrane bundle 221"] in the first axial direction (X-axis direction). Therefore, in the fuel cell humidifier 1 according to the present invention, since it is possible to supply the wet gas having sufficient wetness to the intermediate portion of the hollow fiber membrane bundle 221, the efficiency of humidification using the intermediate portion of the hollow fiber membrane bundle 221 can be further improved. Accordingly, the fuel cell humidifier 1 according to the present invention can have further improved humidification performance.

Next, in the fuel cell humidifier 1 according to the present invention, when the first gas is a dry gas, it is possible to increase a distance that the dry gas not in contact with the hollow fiber membrane bundle 221 is able to flow toward the partition wall 5 in the first axial direction (X-axis direction). Accordingly, the fuel cell humidifier 1 according to the present invention is implemented so that it is possible to supply the dry gas that has not exchanged moisture yet also to the intermediate portion of the hollow fiber membrane bundle 221. Therefore, in the fuel cell humidifier 1 according to the present invention, since it is possible to supply the dry gas having sufficient dryness to the intermediate portion of the hollow fiber membrane bundle 221, the efficiency of humidification using the intermediate portion of the hollow fiber membrane bundle 221 can be further improved. Accordingly, the fuel cell humidifier 1 according to the present invention can have further improved humidification performance.

The cartridge 22 may be inserted into the partition wall 5. In this case, a through-hole for insertion of the cartridge 22 may be formed in the partition wall 5. When a plurality of cartridges 22 are accommodated in the mid-case 21, a plurality of through-holes may be formed in the partition wall 5. The partition wall 5 and the mid body 210 may be integrally formed.

The mid-case 21 may include an additional partition wall 6.

The additional partition wall 6 is disposed inside the mid body 210. In the first axial direction (X-axis direction), the additional partition wall 6 may be disposed between the mid-inlet 212 and the partition wall 5. Accordingly, the additional partition wall 6 may partition the inside of the mid body 210 so that an additional inflow space AIS is provided in the inflow space IS.

A passage hole 60 may be formed in the additional partition wall 6. The passage hole 60 may be formed to pass through the additional partition wall 6. The passage hole 60 may allow the first gas to pass. Accordingly, the first gas flowing in through the mid-inlet 212 may flow into the additional inflow space AIS through the passage hole 60.

Compared to a comparative example in which the additional partition wall 6 having the passage hole 60 formed therein is not present, the fuel cell humidifier 1 according to the present invention may reduce a flow rate of the first gas flowing into the additional inflow space AIS using the additional partition wall 6 having the passage hole 60 formed therein. Accordingly, by reducing the flow rate of the first gas flowing into the intermediate portion of the hollow fiber membrane bundle 221, the fuel cell humidifier 1 according to the present invention may reduce the flow rate of the first gas that flows into the intermediate portion of the hollow fiber membrane bundle 221 and has a relatively short residence time inside the cartridge 22. Therefore, the fuel cell humidifier 1 according to the present invention is implemented so that it is possible to simultaneously improve the efficiency of humidification using the intermediate portion of the hollow fiber membrane bundle 221 and improve the overall efficiency of humidification using the hollow fiber membrane bundle 221 in consideration of the residence time inside the cartridge 22.

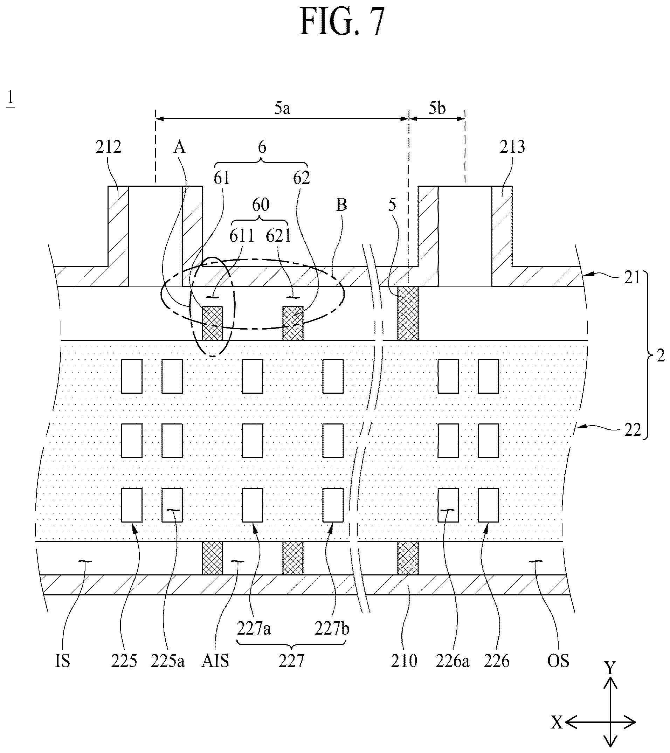

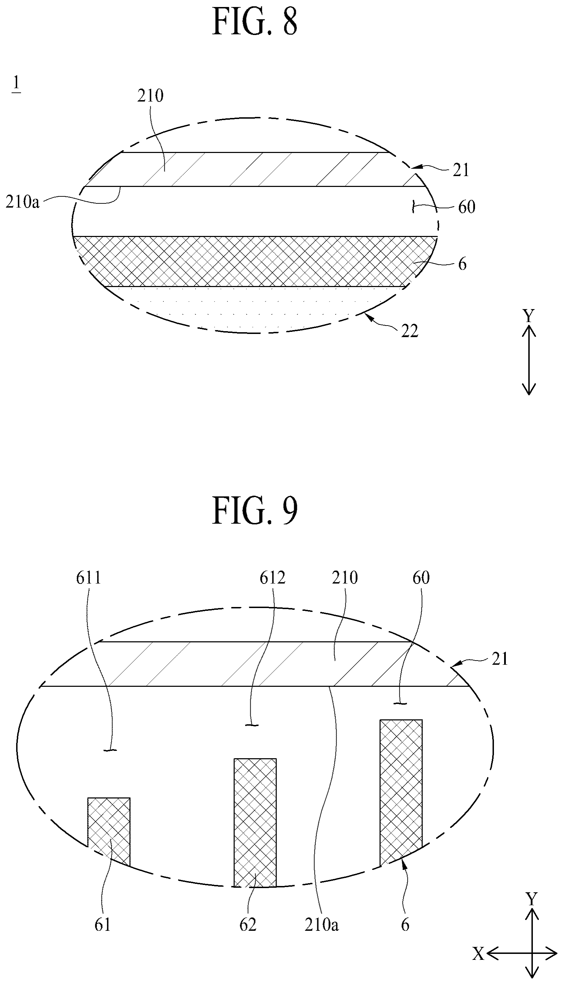

Due to the passage hole 60, the additional partition wall 6 may be disposed to be partially spaced from the inner surface 210a of the mid body 210. In this case, the passage hole 60 may be disposed between the inner surface 210a of the mid body 210 and the additional partition wall 6. Based on FIGS. 7 and 8, an upper portion of the additional partition wall 6 may be spaced from the inner surface 210a of the mid body 210, and the passage hole 60 may be disposed between an upper surface of the additional partition wall 6 and the inner surface 210a of the mid body 210.

The cartridge 22 may be inserted into the additional partition wall 6. In this case, a through-hole for insertion of the cartridge 22 may be formed in the additional partition wall 6. When a plurality of cartridges 22 are accommodated in the mid-case 21, a plurality of through-holes may be formed in the additional partition wall 6. The additional partition wall 6 and the mid body 210 may be integrally formed.

Referring to FIGS. 2 to 9, the mid-case 21 may include a plurality of additional partition walls 6.

The additional partition walls 6 may be disposed apart from each other in the first axial direction (X-axis direction). The passage hole 60 may be formed in each of the additional partition walls 6. The additional inflow space AIS may be partitioned into a plurality of spaces by the additional partition walls 6, and the corresponding spaces may be connected to communicate with each other by the passage holes 60 formed in the additional partition walls 6.

A first additional partition wall 61 among the additional partition walls 6 may be disposed to be spaced a longer distance from the partition wall 5 than a second additional partition wall 62 among the additional partition walls 6. That is, the first additional partition wall 61 may be disposed at a position that is closer to the mid-inlet 212 than the second additional partition wall 62. In this case, a first passage hole 611 formed in the first additional partition wall 61 may be formed to have a larger area than a second passage hole 621 formed in the second additional partition wall 62. That is, the second passage hole 621 may be formed to have a smaller area than the first passage hole 611. Accordingly, the second passage hole 621 may be implemented to allow passage of the first gas with a lower flow rate compared to the first passage hole 611. Therefore, the fuel cell humidifier 1 according to the present invention may further reduce the flow rate of the first gas passing through the second passage hole 621 compared to the flow rate of the first gas passing through the first passage hole 611. This takes into consideration that the residence time during which the first gas flows inside the cartridge 22 is even shorter for the first gas that has passed through the second passage hole 621. Accordingly, the fuel cell humidifier 1 according to the present invention is implemented so that it is possible to simultaneously improve the efficiency of humidification using the intermediate portion of the hollow fiber membrane bundle 221 and improve the overall efficiency of humidification using the hollow fiber membrane bundle 221 in consideration of the residence time inside the cartridge 22.

Although FIG. 7 illustrates that the mid-case 21 includes two additional partition walls 6, and FIG. 9 illustrates that the mid-case 21 includes three additional partition walls 6, the present invention is not limited thereto, and the mid-case 21 may be implemented to include four or more additional partition walls 6. The passage hole 60 may be formed in each of the additional partition walls 6. The passage holes 60 may be formed so that a passage hole 60 disposed closer to the partition wall 5 in the first axial direction (X-axis direction) has a smaller area. Therefore, the fuel cell humidifier 1 according to the present invention is implemented so that it is possible to simultaneously improve the efficiency of humidification using the intermediate portion of the hollow fiber membrane bundle 221 and improve the overall efficiency of humidification using the hollow fiber membrane bundle 221 by implementing the first gas passing through the passage holes 60 to have different flow rates in consideration of the residence time inside the cartridge 22.

Meanwhile, when the mid-case 21 has the additional partition wall 6, the cartridge 22 may include an additional inlet 227.

The additional inlet 227 is formed in the inner case 222. The additional inlet 227 may be formed in one surface of the inner case 222. The additional inlet 227 may allow the first gas to flow into the inner case 222. The additional inlet 227 may be formed to pass through the one surface of the inner case 222.

In the first axial direction (X-axis direction), the additional inlet 227 may be disposed between the additional partition wall 6 and the partition wall 5 and may allow the first gas to flow into the inner case 222. Accordingly, the first gas that passes through the passage hole 60 formed in the additional partition wall 6 and flows into the additional inflow space AIS may flow into the intermediate portion of the hollow fiber membrane bundle 221 through the additional inlet 227. Therefore, since the first gas that has not exchanged moisture with the second gas flows into the intermediate portion of the hollow fiber membrane bundle 221, the efficiency of humidification using the intermediate portion of the hollow fiber membrane bundle 221 can be improved.

The additional inlet 227 may be implemented as a plurality of through-holes passing through the one surface of the inner case 222. In this case, the additional inlet 227 may include a plurality of additional windows formed to pass through different portions of the inner case 222. The additional windows may be disposed apart from each other in the second axial direction (Y-axis direction). The additional windows may be disposed to constitute a matrix form by being spaced from each other in the first axial direction (X-axis direction) and the second axial direction (Y-axis direction). Although not illustrated, the additional inlet 227 may be implemented as one through-hole that passes through the one surface of the inner case 222. Meanwhile, although FIG. 7 illustrates that the additional inlet 227 is disposed toward a second sidewall of the mid body 210 instead of a first sidewall thereof in which the mid-inlet 212 is disposed, the present invention is not limited thereto, and the additional inlet 227 may be disposed toward the first sidewall. The additional inlet 227 may also be disposed toward a third sidewall facing the first sidewall or a fourth sidewall facing the second sidewall. The additional inlet 227 may be disposed toward at least one sidewall among the first to fourth sidewalls.

Meanwhile, when the mid-case 21 has a plurality of additional partition walls 6, the cartridge 22 may include a plurality of additional inlets 227.

The additional inlets 227 may be disposed apart from each other in the first axial direction (X-axis direction). In the first axial direction (X-axis direction), the additional inlets 227 may be disposed between the additional partition walls 6.

For example, a first additional inlet 227a among the additional inlets 227 may be disposed between the first additional partition wall 61 and the second additional partition wall 62. A portion of the first gas that passes through the first passage hole 611 and flows in between the first additional partition wall 61 and the second additional partition wall 62 may flow into the cartridge 22 through the first additional inlet 227a. The remaining portion of the first gas that passes through the first passage hole 611 and flows in between the first additional partition wall 61 and the second additional partition wall 62 may pass through the second passage hole 621 and flow in between the second additional partition wall 62 and the partition wall 5. In this case, a second additional inlet 227b among the additional inlets 227 may be disposed between the first additional partition wall 61 and the second additional partition wall 62. Accordingly, the first gas that passes through the second passage hole 621 and flows in between the second additional partition wall 62 and the partition wall 5 may partially or entirely flow into the cartridge 22 through the second additional inlet 227b.

In this way, by improving the efficiency of humidification using the intermediate portion of the hollow fiber membrane bundle 221 by using the additional partition walls 6, the passage holes 60, and the additional inlets 227, the fuel cell humidifier 1 according to the present invention can have further improved humidification performance.

The present invention that has been described above is not limited to the above-described embodiments and the accompanying drawings, and it should be apparent to those of ordinary skill in the art to which the present invention pertains that various substitutions, modifications, and changes are possible within the scope not departing from the technical idea of the present invention.

## Claims

1. A mid-case of a fuel cell humidifier that is provided in a fuel cell humidifier that uses a wet gas to humidify a dry gas to be supplied to a fuel cell stack, the mid-case comprising:
a mid body accommodating at least one cartridge including a hollow fiber membrane bundle;
a mid-inlet for allowing a first gas to flow into the mid body;
a mid-outlet that is disposed apart from the mid-inlet in a first axial direction and is for allowing the first gas to flow out from inside the mid body;
a partition wall disposed inside the mid body and partitioning the inside of the mid body into an inflow space through which the first gas flows in and an outflow space through which the first gas flows out; and
an additional partition wall disposed inside the mid body and disposed between the mid-inlet and the partition wall in the first axial direction,
wherein the partition wall is disposed at a position where a distance from the mid-outlet is shorter than a distance from the mid-inlet, and
a through-hole for allowing the first gas to pass is formed in the additional partition wall.

2. The mid-case according to claim 1, wherein:
the additional partition wall is provided as a plurality of additional partition walls inside the mid body; and
the additional partition walls are disposed apart from each other in the first axial direction.

3. The mid-case according to claim 2, wherein:
in the first axial direction, a first additional partition wall among the additional partition walls is disposed to be spaced a longer distance from the partition wall than a second additional partition wall among the additional partition walls; and
a first passage hole formed in the first additional partition wall is formed to have a larger area than a second passage hole formed in the second additional partition wall.

4. The mid-case according to claim 2, wherein:
a passage hole for allowing the first gas to pass is formed in each of the additional partition walls; and
the passage holes are formed so that a passage hole disposed closer to the partition wall in the first axial direction has a smaller area.

5. A fuel cell humidifier comprising:
a humidification module using a wet gas to humidify a dry gas to be supplied to a fuel cell stack;
a first cap coupled to one end of the humidification module; and
a second cap coupled to the other end of the humidification module,
wherein the humidification module includes a mid-case of which both ends are open and at least one cartridge accommodated inside the mid-case,
the mid-case includes a mid body accommodating the cartridge, a mid-inlet for allowing a first gas to flow into the mid body, a mid-outlet that is disposed apart from the mid-inlet in a first axial direction and is for allowing the first gas to flow out from inside the mid body, a partition wall disposed inside the mid body and partitioning the inside of the mid body into an inflow space through which the first gas flows in and an outflow space through which the first gas flows out, and an additional partition wall disposed inside the mid body and disposed between the mid-inlet and the partition wall in the first axial direction,
the partition wall is disposed at a position where a distance from the mid-outlet is shorter than a distance from the mid-inlet in the first axial direction, and
a through-hole for allowing the first gas to pass is formed in the additional partition wall.

6. The fuel cell humidifier according to claim 5, wherein:
the additional partition wall is provided as a plurality of additional partition walls inside the mid body; and
the additional partition walls are disposed apart from each other in the first axial direction.

7. The fuel cell humidifier according to claim 6, wherein:
in the first axial direction, a first additional partition wall among the additional partition walls is disposed to be spaced a longer distance from the partition wall than a second additional partition wall among the additional partition walls; and
a first passage hole formed in the first additional partition wall is formed to have a larger area than a second passage hole formed in the second additional partition wall.

8. The fuel cell humidifier according to claim 6, wherein:
a passage hole for allowing the first gas to pass is formed in each of the additional partition walls; and
the passage holes are formed so that a passage hole disposed closer to the partition wall in the first axial direction has a smaller area.

9. The fuel cell humidifier according to claim 5, wherein the cartridge includes:
an inner case having an opening at both ends;
an inner inlet for allowing the first gas to flow into the inner case;
an inner outlet that is disposed apart from the inner inlet in the first axial direction and is for allowing the first gas to flow out from inside the inner case; and
an additional inlet disposed between the additional partition wall and the partition wall in the first axial direction to allow the first gas to flow into the inner case.

10. The fuel cell humidifier according to claim 9, wherein:
the additional partition wall is provided as a plurality of additional partition walls inside the mid body;
the additional partition walls are disposed apart from each other in the first axial direction;
the additional inlet is provided as a plurality of additional inlets in the cartridge;
the additional inlets are disposed apart from each other in the first axial direction; and
in the first axial direction, the additional inlets are disposed between the additional partition walls.
